# EUROPEAN PATENT SPECIFICATION

(11) **EP 2 103 073 B1**
(45) Date of publication and mention of the grant of the patent: **07.07.2010**
(21) Application number: 08705099.3
(22) Date of filing: 17.01.2008
(51) Int. Cl.: H04L 29/06

(54) **METHOD AND SYSTEM FOR CONTROLLING A COMPUTER APPLICATION PROGRAM**
VERFAHREN UND SYSTEM ZUR STEUERUNG EINES COMPUTERANWENDUNGSPROGRAMMES
PROCÉDÉ ET SYSTÈME DE COMMANDE D'UN PROGRAMME D'APPLICATION D'ORDINATEUR

(43) Date of publication of application: 23.09.2009
(73) Proprietor: DLB Finance & Consultancy B.V., 4874 LV Etten-Leur (NL); HITD Information Technology B.V., 3181 NM Rozenburg (NL)
(72) Inventor: BENSCHOP, Dirk, Leonard, 4874 LV Etten-Leur (NL); BENSCHOP, Henderik, Reinout, 3181 NM Rozenburg (NL)
(74) Representative: van Looijengoed, Ferry Antoin Theodorus
(86) International application number: PCT/NL2008/050030
(87) International publication number: WO 2009/091241

(56) References cited:
- WO-A-02/075547
- US-A1- 2005 249 214
- US-A1- 2005 273 857

## Description

### FIELD OF THE INVENTION

The invention relates to the field of electronic communication using one or more computer devices.

### BACKGROUND OF THE INVENTION

With the proliferation of the Internet, host systems can provide their services to numerous client systems, where both host and client systems are distributed throughout the world. Once a proper connection is established, information can flow freely between a host system and a client system.

For example, in a conventional distributed network a plurality of host systems or servers are in communication with a plurality of client systems via a network or a collection of networks, e.g., the Internet. The architecture of such a distributed network is a source of strength (e.g., enabling free flow of information between numerous systems) and a source of vulnerability (e.g., creating vulnerabilities to malicious attacks.

Specifically, when a client system attempts to establish a connection, e.g., a TCP (Transmission Control Protocol) connection, to a host system, the client and host exchange a set sequence of messages or packets. This general approach applies to all TCP connections: Web, telnet, email and so on. When the connection is set up, the client system may send requests to the host system, e.g. for content.

In order to prevent or reduce malicious actions of client system on host systems, firewalls are commonly know. A firewall is a dedicated appliance or software which inspects network traffic passing through it, and denies or permits passage based on a set of rules.

There are several classifications of firewalls depending on where the communication is taking place, where the communication is intercepted and the state that is being traced. Network layer firewalls, also called packet filters, operate at a relatively low level of the TCP/IF protocol stack, not allowing packets to pass through the firewall unless they match the established rule set. These firewalls filter traffic based on packet attributes. The firewall administrator may define the rules; or default rules may apply. Network layer firewalls generally fall into two sub-categories. A stateful firewall is a firewall that keeps track of the state of network connections (such as TCP streams, UDF communication) traveling across it. The firewall is programmed to distinguish legitimate packets for different types of connections. Only packets matching a known connection state will be allowed by the firewall, while other packets will be rejected. Stateless firewalls have packet-filtering capabilities, but cannot make more complex decisions on what stage communications between hosts have reached.

Application-layer firewalls work on the application level of the TCP/IP stack (i.e., all browser traffic, or all telnet or ftp traffic), and may intercept all packets traveling to or from an application. In principle, application firewalls can prevent all unwanted outside traffic from reaching protected machines. These firewalls inspect packets for improper content. An XML firewall exemplifies a recent kins of application-layer firewall. An example of such a firewall is provided by EP 1 296 252.

WO 02/075547 discloses an application layer security method and system for protecting an application from executing illegal or harmful operation requests received from a distrusted environment. The method applies one or more pipes to an application-layer contents of an operation request to determine if the operation request is illegal or harmful. In one of the pipes, an application path of the application is designated as restricted. The destination of an operation request is then determined and blocked if the destination is equal to the designated application path.

US 2005/0273857 discloses a system and methodology for intrusion detection and prevention. Intrusion descriptions are defined specifying exploits that may be attempted by malicious network traffic, the intrusion descriptions indicating specific applications that may be targeted by individual exploits. For a particular application participating in network communication, a subset of the intrusion descriptions is derived that is specifically applicable to that particular application. The subset is used for monitoring network traffic destined for the particular application for detecting an attempted network intrusion. If a network intrusion is detected, network traffic destines for the particular application determined to comprise an exploit is blocked.

The network layer firewalls are disadvantageous in that complicated rule sets must be set up and maintained. On the other hand, the application-layer firewalls are disadvantageous in that the screening of the content of the packets require a considerable amount of resources and/or may take a significant amount of time.

There is a need in the art for an improved security system capable of e.g. saving resource.

### SUMMARY OF THE INVENTION

A computer-implemented method of controlling a computer application program in a computer system configured for electronic communication with a client as defined in claim 1 is disclosed.

A computer program for executing the method and a computer readable media containing such a computer program are also disclosed.

A computer system for controlling a computer application program as defined in claim 15 is also disclosed.

The client request may e.g. comprise a command for the computer application program.

It should be appreciated that the first set of allowable requests may comprise a selection of a (large) plurality of requests valid for said computer application program.

The proposed method and system combine an increased security with a decreased application of resources. Generally, a computer application program is capable of handling a plurality of requests, frequently a (very) large amount of requests. The proposed method and system are capable of selecting only those requests that are allowable, given the application state of the computer program(s). Only requests matching the allowable requests for that state will be executed, providing for a secure system. On the other hand, the method and system do not examine the content itself but keep track of application layer requests that may be expected from a client in relation to the application state of the computer program(s) at a particular moment. Otherwise, the request is rejected or simply stalled, but not executed. This approach allows for speedy yet secure screening of traffic. Request sets are dynamically built corresponding to the applicable application state of the computer application program. The change of the communication state of the computer system or another computer system may be determined by the execaution of a request by the application program. Screening on the application level of the requests, i.e. below the level of the actual content, is fast but secure.

It should be appreciated that the method and computer system may be in communication with one or more other computer systems that in fact run the computer application program. The computer system then functions as a gatekeeper.

Examples of application programs include web servers, web services, application servers and in particular, databases.

There are various ways of informing the computer system of the applicable request set with allowable requests for a particular application state of the computer application program.

The embodiment of claim 2, on the other hand, has the advantage that the applicable request set is directly received from the computer application program (or another program configured for the application state of the computer program to the computer system).

The embodiment of claim 4 enables keeping track of a plurality of clients connected to the computer system by means of their connections, e.g. like a stateful firewall. In particular, the computer system monitors e.g. which client is connected and/or which client requests have been made by which client (connection state). The application state of the computer application program may then be related to a particular connection state.

The embodiment of claim 5 allows to distinguish between malicious and non-malicious clients. Most organizations use compunter systems, commonly referred to as proxies, that separate a local area network from a wide area network, such as the Internet. The proxies, amongst other functions, use network address translation (NAT). The amount of requests made to the proxy is considerable, but these requests are most probably non-malicious. By setting an appropriate threshold (based e.g. on the average number or requests that may be expected from a local area network using historic data of the number of login requests received from internal clients), malicious outside requests may be distinguished from non-malicious requests from the local area network. The frequency of requests from inside clients can be estimated on the basis of the number of login requests and the flow of the application program, i.e. the sequence of application states of the computer application program. A large number of requests from outside clients may indicate an attack. Such requests may be denied. Requests from these clients may be monitored, rejected, or analysed on the basis of a contact history, past behaviour and/or domain.

The embodiments of claims 6-9 allow for blocking or throttling back clients that e.g. send a high number of requests or a high number of the same client requests. More general, malicious clients may be distinguished from non-malicious clients, the latter being serviced before the former even if these requests arrive later at the computer system, although these embodiments add to the security in general, it should be appreciated that these embodiments may also be applied separate from the invention as defined in claims 1-5.

Although the client and the computer system may be implemented on a single device, the embodiment of claim 10 is preferred,

The amount of possible requests is especially large for database computer application programs. The embodiments of claims 11, 12 are particularly advantageous in these cases.

The computer system of claim 15 may be configured for performing the method of the claims 1-12.

In particular, the computer system further comprises:
- an application state defector configured for detecting said first application state and said second application state;
- a request set retriever configured for retrieving said first request set and said second request set, respectively, in response to detecting said first application state or said second application state.

This embodiment has the advantage that the computer application program only reports its application state for a particular client (connection) to the computer system. The computer system may use the reported state to obtain, retrieve or update the applicable request set for this state of the computer application program.

In an embodiment, the computer system further comprises a request set receiver configured for receiving said first request set and said second request set.

In an embodiment, the client request receiver is configured for receiving at least one of hypertext transfer protocol (HTTP) requests, file transfer protocol (FTP) requests, simple mail transfer protocol (SMTP) requests and telnet requests.

In an embodiment, the computer system further comprises a connection state monitor configured for determining a connection state between said client and said computer system, said computer system being configured such that said first application state and a second application state of said computer application program are related to said connection state.

In an embodiment, the computer system is configured for maintaining a threshold amount of client application layer requests per time unit and wherein said instruction module is configured for instructing said computer application program to execute said client application layer request only if the amount of client application layer requests is below said threshold amount.

In an embodiment, said computer system further comprises:
- a distinguishing module configured for distinguishing between malicious and non-malicious clients;
- a ranking module configured for ranking client application layer requests from said malicious and said non-malicious clients to obtain a queue of non-malicious client application layer requests followed by said malicious client application layer requests;
- wherein said instruction module is configured for instructing said computer application program to first execute said non-malicious client application layer requests.

In are embodiment, the computer system further comprises a second analyzer module configured for analysing said malicious client application layer requests from said queue after said installation module having instructed all non-malicious client application layer requests.

In an embodiment, the computer system further comprises a storage module for storing a contact history from clients and a ranking module configured for ranking clients known from said contact history higher in said queue than clients not known from said contact history.

In an embodiment, the distinguishing module is configured for distinguishing said malicious and non-malicious clients on the basis of at least one of the following: number of client application layer requests received from clients, contact history of clients with said computer system, type of content of application layer requests, content of application layer requests received from said clients.

In an embodiment, the computer system is configured for receiving said client application layer requests over a communication network.

In an embodiment, the computer application program is a database application program, preferably installed on said other computer system.

In an embodiment, the computer system comprises:
- a receiver configured for receiving said first set of allowable database requests from said database application program of said other computer system; and
- said instruction module is configured for instructing said database application program to execute a database operation only if said client application layer request matches one of said allowable database requests.

Two or more of these embodiments may be combined.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIGS. 1A and 1B provide schematic illustrations of various situations of use of the computer system according to an embodiment of the invention;
FIGS. 2A and 2B provide schematic illustrations of the system according to an embodiment of the invention; and
FIGS. 3A and 3B display steps of a method according to an embodiment of the invention.

### DETAILED DESCRIPTION OF THE DRAWINGS

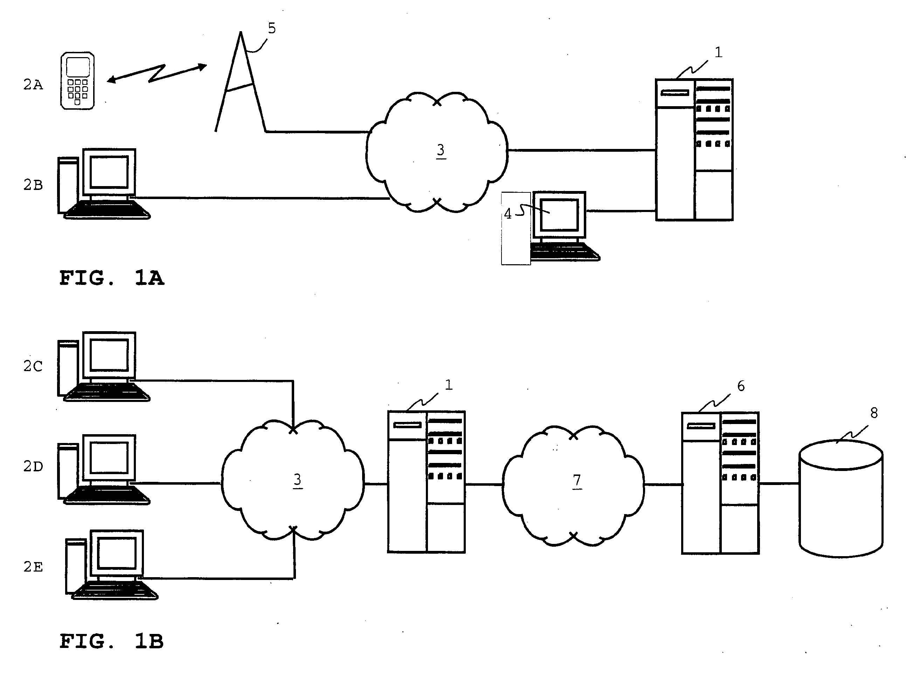

FIGS. 1A and 1B provide schematic illustrations of various situations of use of a computer system 1 according to an embodiment of the invention.

In FIG. 1A, client devices 2A, 2B are connected via a network 3 to the computer system 1. The computer system 1, however, may also run a client itself and provide a user interface for the client on display 4. The computer system 1 also runs a computer application program, such as a web server or a database application, to which requests (commands) of the clients are directed. Client devices may include mobile wireless devices 2A, such as telephones, PDA's, laptop computers etc. communicating with the network 3 through a wireless access network 5 and wired devices, such as desktop computers 2B.

In FIG. 1B, client devices 2C, 2D and 2E are connected to the computer system 1 via a first network 3. The computer system 1 functions as a gatekeeper for a host system or server 6 running a particular computer application program to which requests from the clients are directed. A plurality of such servers 6 may be provided. The computer system 1 is communicatively connected to the host system 6 via a second network 7. The host system 6 has access to a database 8 and may in particular run a database application using database 8.

Various other situations may be contemplated by the person skilled in the art for the application of the computer system 1 without departing from the scope of the present invention.

The client application program may be installed and run on the computer system 1, the host system 6 or one or more other computer systems. The computer application program has a plurality of application states. Application states may represent logical steps in a particular (predetermined) sequence of states for the application program. Application states of the computer application program may change following execution of a request to that program. A large amount of requests is valid for these application states. However, for each of the application states, only a particular subset of the large amount of requests is allowable.

As an example, the activation of a link on a website page may return another web page with a new set of links (change of the application state). Of the many possible requests to the web server, only the activation of the links on the returned web page belongs to the set of allowable requests for this application state.

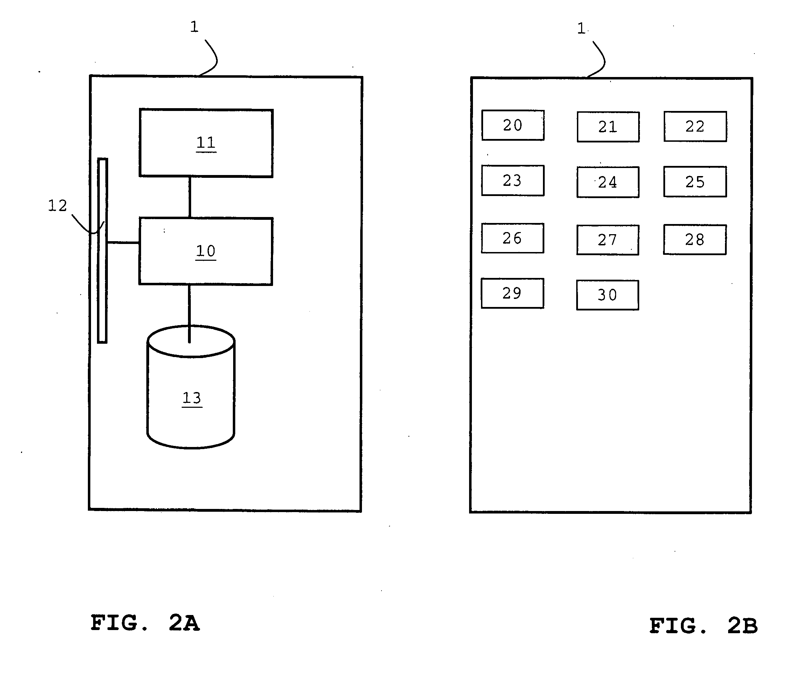

In FIG. 2A, the computer system 1 of FIGS. 1A and 1B is schematically illustrated. The computer system 1 comprises a processor 10, a memory 11, a network adapter 12 for communication with one or more of the devices 2A-2E via the networks 3 (and possibly with the host system 6 via the second network 7). It should be appreciated that normally, the computer system 1 of FIGS. 1A and 1B would be configured for connecting to more than two or three client devices.

The computer system 1 may also contain a database 13 with request sets for various application states of the application program run by the computer system 1 or the host system 6. The database 13 may also be used by a database application program run on the computer system 1.

The specific functions of the computer system 1 are schematically illustrated in FIG. 2B and will now be described in further detail. It should be appreciated that the functions may be largely implemented as software code portions of one or more computer programs executed on the processor 10.

The computer system 1 comprises a connection module 20 for establishing a connection with the client devices 2A-2E. The connection module monitors the connection with the client devices. The connection module 20 may be configured to determine a communication state for the client to the computer system 1.

The computer system 1 comprises a client request receiver 21 configured for receiving (and possibly processing) a request from client devices 2A-2E or an internal client. The client request is a request or command for the computer application program installed on the computer system 1 and/or the host system 6. The client request may e.g. be a http-request resulting from activation of a link on a particular web page or a command for a database 8, 13.

The computer system 1 may also have an analyzer module 22 configured for analyzing if the client request received by the client request receiver 21 matches an allowable request of a request set comprising one or more allowable requests corresponding to an application state of the computer application program in relation to that client.

The computer system 1 also comprises an instruction module 23 for instructing the computer application program of the computer system 1 and/or the host system 6 to execute the client request only if the client request matches one of the allowable requests of said the request set.

Of course, the client request receiver 21 may receive further client requests. The analyzer module 22 may analyze whether the further client requests match allowable requests of further corresponding requests sets, each of the request sets corresponding to different application states of the computer application program. The instruction module 23 may then instruct the computer application program to execute the further requests only if these requests match allowable requests of the applicable request set of the corresponding application state.

There are various ways of informing the computer system 1 of the applicable request set with allowable requests for a particular application state of the computer application program.

The computer system 1 may e.g. comprise an application state detector 24 configured for detecting the application states of the computer application program of the computer system 1 and/or the host system 6. If the detector 24 detects an application state of the program, a request set retriever 25 is provided for retrieving, obtaining and/or updating the request set for that particular application state. The request set may e.g. be retrieved from the database 13.

However, the applicable request set of allowable requests for a particular application state of the computer application program may also be received by a request set receiver 26 of the computer system 1. The request set may e.g. be received from the computer application program running on the computer system 1 or the server 6, or from another computer program.

The computer system 1 may also store a threshold amount of client requests. The computer system 1 is configured for maintaining a threshold amount of client requests per time unit. The instruction module 23 is configured for instructing the computer application program to execute the client request only if the amount of client requests is below said threshold amount. Such functionality may e.g. prove advantageous when the computer system 1 is implemented in a proxy server or when many clients share a common public IP address.

In an alternative embodiment, the computer system 1 may also have a distinguishing module 27 configured for distinguishing between malicious and non-malicious clients. Malicious and non-malicious clients may be distinguished e.g. on the basis the number of client requests received from clients, the contact history of clients with the computer system 1, the type of content of requests and/or the content of requests received from said clients. A ranking module 28 is provided that is configured for ranking client requests from the malicious and said non-malicious clients to obtain a queue of non-malicious client requests followed by the malicious client requests. The instruction module 23 is configured for instructing said computer application program to first execute said non-malicious client requests. The malicious client requests may be analysed by another analyzer module 29 after the legitimate requests have been handled, thereby penalizing the malicious client. The results may e.g. be used for updating a contact history between the computer system 1 and the malicious clients.

The computer system 1 may have a storage module 30 for storing a contact history from clients. The ranking module 28 may be configured for ranking clients known from said contact history higher in the queue than clients not known from said contact history.

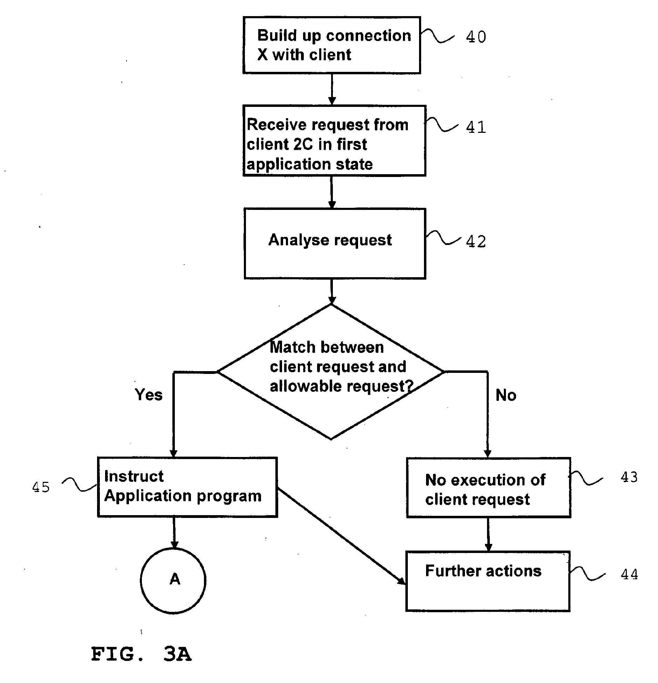

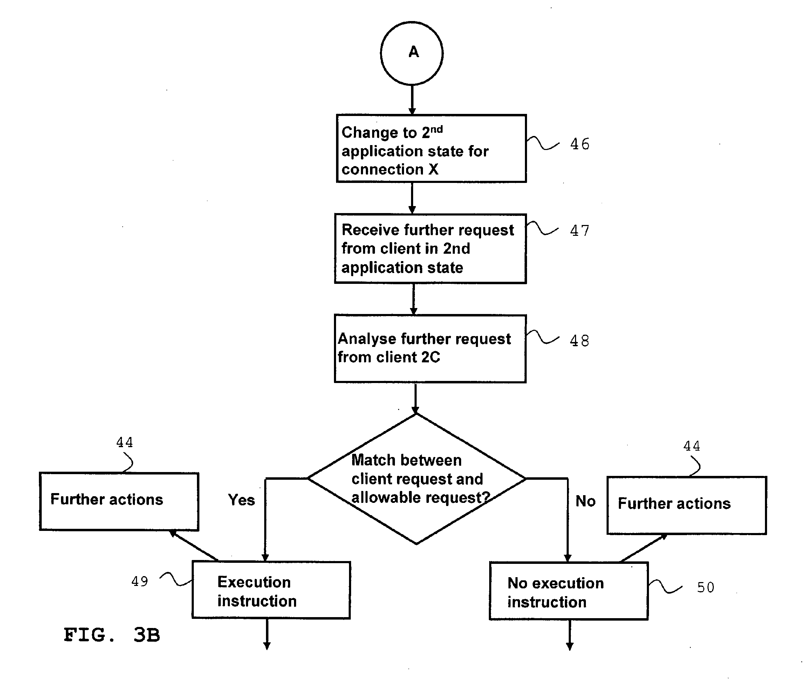

Next, the operation of the computer system 1 will be described with reference to FIGS. 3A and 3B. It will be assumed that the computer system 1 functions as a gate keeper for a host system 6 running a database application program for retrieving data from the database 8, in conformance with FIG. 1B.

A client installed on client device 2C requests use of a computer application program running on host system 6 via communication network 3.

In step 40, computer system 1 intercepts the request and establishes a connection using connection module 20. Connection module 20 monitors the connection and the requests from client device 2C. A starting page, e.g. a html page, is presented to the client device 2C. It is assumed here that the computer system 1 does not screen the initial request, although an initial application state with assigned allowable requests for starting the computer application may apply.

The starting page of the computer application program presented to the client device 2C allows a number of requests to be made, e.g. http GET requests. These requests constitute a first request set of allowable requests corresponding to the starting page (the application state) of the computer application program. For simplicity reasons it will be assumed that the only valid requests here are constituted by a set of hyperlinks that can be activated. It should be appreciated, however, that other requests or commands may be possible, e.g. http-post requests.

In step 41, a http-request is received from the client device 2C resulting from activation of a hyperlink from the starting page. The connection module 20 monitors that this request comes from client device 2C that issued a request from the starting page.

The request set receiver 26 receives the first request set from the computer application program, running on the host system 6, valid for the starting page. In step 42, the analyzer module 22 of comuter system 1 examines whether the http-request received from client device 2C matches an allowable request of the received first request set for the html starting page.

If the http-request is not matched by a request of the first request set, the instruction module 23 would not instruct the computer application program running on host system 6 to execute the http-request (step 43). It should be noted that it is possible that a request that seems valid from the client device perspective will not be executed when this request is not part of the applicable request set.

In step 44, further actions are performed on the not executed request. These actions include, but are not limited to, discarding.the request, analyzing the request, storing the requests, extract information from the request for building a request history etc.

If the analyzer module 22 finds that the http-request from client device 2C matches an allowable request of the first request set of the starting html page, the instruction module 23 instructs the computer application program to execute the http-request on the database 8 in step 45. It is noted that further actions may also be performed on these executed requests.

Execution of the the request makes the application program extract data from the database to build a new html page in dependence on the request. The new html page is transmitted to the client device 2C.

The new html page corresponds to a new application state of the computer application program (step 46). The connection module 20 that maintains the open connection with client device 2C registers that the new html page has been transmitted to the client device 2C.

In step 47, a further http-request is received from client device 2C.

Before or after having received the http-request, the computer application program has informed the analyzer module 22 of the request set corresponding to the new application state. Upon receipt of the further http-request, the analyzer module 22 examines in step 48 whether the further http-request matches an allowable request of the request set valdid for the new application state.

Finally, dependent on the outcome of the analysis by the analyzer module 22, the instruction module module 23 will either instruct the computer application program to execute the request (step 49) or not (step 50).

It should be appreciated that the flow chart continues for further requests of the client device 2C.

It should also be appreciated that the computer system 1 keeps track of the application state for each client, e.g. using the connection module 20 having tables for each connection, such that the computer system 1 is configured for handling requests from multiple clients, whereas the application state of the computer application program(s) may be different for each of the clients at a particular instance of time.

It should also be appreciated that each request received from a client may be analysed in accordance with step 44, e.g. for statistical reasons.

## Claims

1. A computer-implemented method of controlling a computer application program in a computer system (1) configured for electronic communication with a client and having access to a first request set of one or more allowable Application layer requests corresponding to a first application state of said computer application program and a second request set of one or more allowable application layer requests corresponding to a second application state of said computer application program running on said computer system or another computer system in relation to said client, the method comprising the steps of:
- receiving (41), at said computer system, a client application layer request from said client for said computer application program in said first predetermined application statue;
**characterized by**
- analysing (42) if said client application layer request matches one of said allowable requests of said first request set in response to receiving said client request;
- instructing (45) said computer application program to execute said client application layer request only if said client application layer request matches one of said allowable application layer requests of said first request set;
- changing (46) said first application state to said second application state of said computer application program in response to said executing said client application layer request when said client application layer request matches said one of said allowable application layer requests of said first request set, said second application state being different from said first application state;
- receiving (47j a further client application layer request from said client device;
- analysing (48) if said further client application layer request matches an allowable application layer request of said second request set;
- instructing (49) said computer application program to execute said further client application layer request only if said further client application request matches one of said allowable application layer requests of said second request set.

2. The method according to claim 1, wherein at least one of said first request set or said first application state is obtained from said computer application program running on said computer system (1) or said other computers system.

3. The method according to claim 1, wherein said application layer requests comprise at least one of hypertext transfer protocol (HTTP) requests, file transfer protocol (FTP) requests, simple mail transfer protocol (SMTP) requests and telnet requests.

4. The method according to one or more of the preceding claims, further comprising the steps of:
- determining, by said computer system (1), a connection state between said client and said computer system:
- relating said first application state and a second application state to said connection state.

5. The method according to one or more of the preceding claims, wherein said computer system (1) maintains a threshold amount of client application layer requests per time unit, the method comprising the step of instructing said computer application program to execute said client application layer requests only if the amount of client application layer requests is below said threshold amount.

6. The method according to one or more of the preceding claims, further comprising the steps of:
- distinguishing between malicious and non-malicious clients;
- ranking client application layer requests from said malicious and said non-malicious clients to obtain a queue of non-malicious client application layer requests followed by said malicious client application layer requests;
- instructing said computer application program to first execute said non-malicious client requests.

7. The method according to claim 6, further comprising the step of analysing said malicious client application layer requests from said queue after having instructed said computer application program to execute all non-malicious client application layer requests.

8. The method according to claim 6 or 7, wherein said computer system (1) stores a contact history from clients, further comprising the step of ranking clients known from said contact history higher in said queue than clients not known from said contact history.

9. The method according to one or more of the claims 6-8, further comprising the step of distinguishing said malicious and non-malicious clients on the basis of at least one of the following: number of client application layer requests received from clients, contact history of clients with said computer system, type of content of application layer requests, content of application layer requests received from said clients.

10. The method according to one or more of the preceding claims, wherein said client is implemented in a client device (2A-2E) and said computer system (1) is connected to at least one communication network (3,) to electronically communicate with said client device, the method comprising the step of receiving said client application layer request over said communication network.

11. The method according to one or more of the preceding claims, wherein said computer system (1) or said other computer system comprises a database (8) and said computer application program is a database application program.

12. The method according to claim 11, further comprising the steps of:
- receiving said first set of allowable database requests from said database application program;
- instructing a database operation of said database application program of said database (8) only if said client application layer request matches one of said allowable database requests.

13. A computer program comprising software code portions adapted for, when installed on and executed by an electronic systems, performing the method according to claims 1-12.

14. A carrier containing the computer program of claim 13.

15. A computer system (1) for controlling a computer application program on said computer system or another computer system, said computer system being configured for connecting to at least one client comprising:
- a client request receiver (21) configured for receiving a client application layer request and a further client application layer request directed to said computer application program, said computer application program comprising at least a first application state and a second application state, wherein the first and second application state are different application states obtainable by executing the client application layer request;
**characterised by-** an analyzer module (22) configured for analyzing if said client application layer request matches an allowable application layer request of a first request set comprising one or more allowable application layer requests corresponding to said first application state of said computer application program in relation to said client and if said further client application layer request matches an allowable application layer request of said second request set of one or more allowable application layer requests corresponding to said second application state of said computer program in relation to said client;
- an instruction module (23) configured for instructing said computer application program to execute said client application layer request only if said client application layer request matches one of said allowable application layer requests of said first request set to obtain said second application state and for instructing said computer application program to executed said further client application layer request only when said further client application layer request matches one of said allowable application layer requests of said second request set.

16. The computer system (1) according to claim 15, wherein said computer system is further configured for performing the method according to any of the claims 2-12.

## Patentansprüche

1. Computerimplementiertes Verfahren zur Steuerung eines Computeranwendungsprogramms in einem Computersystem (1), das für elektronische Kommunikation mit einem Client bzw. Dienstanforderer konfiguriert ist und auf einen ersten Anforderungssatz einer oder mehrerer zulässiger Anwendungsschichtanforderungen, die einem ersten Anwendungszustand des Computeranwendungsprogramms entsprechen, und einen zweiten Anforderungssatz einer oder mehrerer zulässiger Anwendungsschichtanforderungen zugreift, die einem zweiten Anwendungszustand des Computeranwendungsprogramms entsprechen, das auf dem Computersystem oder einem anderen Computersystem in Bezug auf den Client läuft, wobei das Verfahren die folgenden Schritte aufweist:
- Empfang (41) einer Client-Anwendungsschichtanforderung von dem Client in dem Computersystem für das Computeranwendungsprogramm in dem ersten vorgegebenen Anwendungszustand;
**gekennzeichnet durch**:
- Analyse (42) als Reaktion auf den Empfang der Client-Anforderung, ob die Client-Anwendungsschichtanforderung mit einer der zulässigen Anforderungen des ersten Anforderungssatzes übereinstimmt;
- Anweisen (45) des Computeranwendungsprogramms, die Client-Anwendungsschichtanforderung nur dann auszuführen, wenn die Client-Anwendungsschichtanforderung mit einer der zulässigen Anwendungsschichtanforderungen des ersten Anforderungssatzes übereinstimmt;
Wechseln (46) vom ersten Anwendungszustand zum zweiten Anwendungszustand des Computeranwendungsprogramms als Reaktion auf die Ausführung der Client-Anwendungsschichtanforderung, wenn die Client-Anwendungsschichtanforderung mit einer der zulässigen Anwendungsschichtanforderungen des ersten Anforderungssatzes übereinstimmt, wobei sich der zweite Anwendungszustand vom ersten Anwendungszustand unterscheidet;
- Empfang (47) einer weiteren Client-Anwendungsschichtanforderung von dem Client-Gerät;
- Analyse (48), ob die weitere Client-Anwendungsschichtanforderung mit einer zulässigen Anwendungsschichtanforderung des zweiten Anforderungssatzes übereinstimmt;
- Anweisen (49) des Computeranwendungsprogramms, die weitere Client-Anwendungsschichtanforderung nur dann auszuführen, wenn die weitere Client-Anwendungsschichtanforderung mit einer der zulässigen Anwendungsschichtanforderungen des zweiten Anforderungssatzes übereinstimmt.

2. Verfahren nach Anspruch 1, wobei mindestens einer von dem ersten Anforderungssatz oder dem zweiten Anforderungssatz aus dem Computeranwendungsprogramm erhalten wird, das auf dem Computersystem (1) oder dem anderen Computersystem läuft.

3. Verfahren nach Anspruch 1, wobei die Anwendungsschichtanforderungen mindestens eine der folgenden Anforderungen aufweisen: Anforderungen für Hypertextübertragungsprotokoll (HTTP), Anforderungen für Dateiübertragungsprotokoll (FTP), Anforderungen für Einfaches E-Mail-Übertragungsprotokoll (SMTP), und Telnet-Anforderungen.

4. Verfahren nach einem oder mehreren der vorstehenden Ansprüche, das ferner die folgenden Schritte aufweist:
- Ermitteln eines Verbindungszustands zwischen dem Client und dem Computersystem durch das Computersystem (1);
- Herstellen einer Beziehung des ersten Anwendungszustands und eines zweiten Anwendungszustands zu dem Verbindungszustand.

5. Verfahren nach einem oder mehreren der vorstehenden Ansprüche, wobei das Computersystem (1) einen Schwellwertbetrag der Client-Anwendungsschichtanforderungen pro Zeiteinheit einhält, wobei das Verfahren den Schritt zum Anweisen des Computeranwendungsprogramms aufweist, die Client-Anwendungsschichtanforderungen nur dann auszuführen, wenn die Menge der Client-Anwendungsschichtanforderungen unter dem Schwellwertbetrag liegt.

6. Verfahren nach einem oder mehreren der vorstehenden Ansprüche, das ferner die folgenden Schritte aufweist:
- Unterscheiden zwischen böswilligen und nicht böswilligen Clients;
- Einordnen von Client-Anwendungsschichtanforderungen von den böswilligen und den nicht böswilligen Clients, um eine Warteschlange von nicht böswilligen Client-Anwendungsschichtanforderungen, gefolgt von den böswilligen Client-Anwendungsschichtanforderungen, zu erhalten;
- Anweisen des Computeranwendungsprogramms, die nicht böswilligen Client-Anforderungen zuerst auszuführen.

7. Verfahren nach Anspruch 6, das ferner den Schritt zur Analyse der böswilligen Client-Anwendungsschichtanforderungen aus der Warteschlange aufweist, nachdem das Computeranwendungsprogramm angewiesen worden ist, alle nicht böswilligen Client-Anwendungsschichtanforderungen auszuführen.

8. Verfahren nach Anspruch 6 oder 7, wobei das Computersystem (1) ein Kontaktverlaufsprotokoll von Clients speichert, wobei das Verfahren ferner den Schritt aufweist, in dem aus dem Kontaktverlaufsprotokoll bekannte Clients in der Warteschlange höher eingeordnet werden als Clients, die nicht aus dem Kontaktverlaufsprotokoll bekannt sind.

9. Verfahren nach einem oder mehreren der vorstehenden Ansprüche 6 bis 8, das ferner den Schritt zur Unterscheidung zwischen böswilligen und nicht böswilligen Clients auf der Basis mindestens einer der folgenden Kriterien aufweist: Anzahl der von Clients empfangenen Client-Anwendungsschichtanforderungen, Kontaktverlaufsprotokoll von Clients mit dem Computersystem, Typ des Inhalts von Anwendungsschichtanforderungen, Inhalt der von den Clients empfangenen Anwendungsschichtanforderungen.

10. Verfahren nach einem oder mehreren der vorstehenden Ansprüche, wobei der Client in einem Client-Gerät (2A-2E) implementiert ist und das Computersystem (1) mit mindestens einem Kommunikationsnetz (3) verbunden ist, um mit dem Client-Gerät elektronisch zu kommunizieren, wobei das Verfahren den Schritt zum Empfangen der Client-Anwendungsschichtanforderung über das Kommunikationsnetz aufweist.

11. Verfahren nach einem oder mehreren der vorstehenden Ansprüche, wobei das Computersystem (1) oder das andere Computersystem eine Datenbank (8) aufweist und das Computeranwendungsprogramm ein Datenbank-Anwendungsprogramm ist.

12. Verfahren nach Anspruch 11, das ferner die folgenden Schritte aufweist:
- Empfang des ersten Satzes zulässiger Datenbankanforderungen von dem Datenbank-Anwendungsprogramm;
- Anweisen einer Datenbankoperation des Datenbank-Anwendungsprogramms der Datenbank (8) nur dann, wenn die Client-Anwendungsschichtanforderung mit einer der zulässigen Datenbankanforderungen übereinstimmt.

13. Computerprogramm, das Softwarecode-Abschnitte aufweist, die bei Installation in einem elektronischen System und Ausführung durch dieses System das Verfahren nach einem der Ansprüche 1-12 ausführen.

14. Träger, der das Computerprogramm nach Anspruch 13 enthält.

15. Computersystem (1) zur Steuerung eines Computeranwendungsprogramms in dem Computersystem oder einem anderen Computersystem, wobei das Computersystem für den Anschluß an mindestens einen Client konfiguriert ist, wobei das Computersystem aufweist:
- einen Client-Anforderungsempfänger (21), der für den Empfang einer Client-Anwendungsschichtanforderung und einer weiteren an das Computeranwendungsprogramm gerichteten Client-Anwendungsschichtanforderung angepaßt ist, wobei das Computeranwendungsprogramm mindestens einen ersten Anwendungszustand und einen zweiten Anwendungszustand aufweist, wobei der erste und der zweite Anwendungszustand unterschiedliche Anwendungszustände sind, die durch Ausführen der Client-Anwendungsschichtanforderung erzielbar sind;
**gekennzeichnet durch**
ein Analysatormodul (22) das für eine Analyse konfiguriert ist, ob die Client-Anwendungsschichtanforderung mit einer zulässigen Anwendungsschichtanforderung eines ersten Anforderungssatzes übereinstimmt, der eine oder mehrere zulässige Anwendungsschichtanforderungen aufweist, die dem ersten Anwendungszustand des Computeranwendungsprogramms in Bezug auf den Client entsprechen, und ob die weitere Client-Anwendungsschichtanforderung mit einer zulässigen Anwendungsschichtanforderung des zweiten Anforderungssatzes von einer oder mehreren zulässigen Anwendungsschichtanforderungen übereinstimmt, die dem zweiten Anwendungszustand des Computerprogramms in Bezug auf den Client entsprechen;
- ein Anweisungsmodul (23), das so konfiguriert ist, daß es das Computeranwendungsprogramm anweist, die Client-Anwendungsschichtanforderung nur dann auszuführen, wenn die Client-Anwendungsschichtanforderung mit einer der zulässigen Anwendungsschichtanforderungen des ersten Anforderungssatzes übereinstimmt, um den zweiten Anwendungszustand zu erzielen, und das Computeranwendungsprogramm anweist, die weitere Client-Anwendungsschichtanforderung nur dann auszuführen, wenn die weitere Client-Anwendungsschichtanforderung mit einer der zulässigen Anwendungsschichtanforderungen des zweiten Anforderungssatzes übereinstimmt.

16. Computersystem (1) nach Anspruch 15, wobei das Computersystem ferner für die Durchführung des Verfahrens nach einem der Ansprüche 2 - 12 konfiguriert ist.

## Revendications

1. Procédé implémenté par ordinateur de commande d'un programme d'application d'ordinateur dans un système informatique (1) configuré pour une communication électronique avec un client et ayant accès à un premier ensemble de demandes d'une ou plusieurs demandes de couche d'application admissibles correspondant à un premier état d'application dudit programme d'application informatique et un second ensemble de demandes d'une ou plusieurs demandes de couche d'application admissibles correspondant à un second état d'application dudit programme d'application informatique fonctionnant sur ledit système informatique ou un autre système informatique en relation audit client, le procédé comprenant les étapes de :
- réception (41), sur ledit système informatique, d'une demande de couche d'application client à partir dudit client pour ledit programme d'application d'ordinateur dans ledit premier état d'application prédéterminé ;
**caractérisé par**
- analyse (42) si ladite demande de couche d'application client correspond à une desdites demandes admissibles dudit premier ensemble de demandes en réponse à la réception de ladite demande client ;
- instruction (45) dudit programme d'application informatique pour exécuter ladite demande de couche d'application client seulement si ladite demande de couche d'application client correspond à une desdites demandes de couche d'application admissibles dudit premier ensemble de demandes ;
- changement (46) dudit premier état d'application audit second état d'application dudit programme d'application informatique en réponse à ladite exécution de ladite demande de couche d'application client lorsque ladite demande de couche d'application client correspond à une desdites demandes de couche d'application admissibles dudit premier ensemble de demandes, ledit second état d'application étant différent dudit premier état d'application ;
- réception (47) d'une autre demande de couche d'application client à partir dudit dispositif client ;
- analyse (48) si ladite autre demande de couche d'application client correspond à une demande de couche d'application admissible dudit second ensemble de demandes ;
- instruction (49) dudit programme d'application informatique d'exécuter ladite autre demande de couche d'application client seulement si ladite autre demande d'application client correspond à une desdites demandes de couche d'application admissibles dudit second ensemble de demandes.

2. Procédé selon la revendication 1, dans lequel au moins un dudit premier ensemble de demandes ou dudit premier état d'application est obtenu à partir dudit programme d'application informatique fonctionnant sur ledit système informatique (1) ou ledit autre système informatique.

3. Procédé selon la revendication 1, dans lequel lesdites demandes de couche d'application client comprennent au moins une des demandes de protocole de transfert hypertexte (HTTP), des demandes de protocole de transfert de fichier (FTP), des demandes de protocole de transfert de courrier simple (SMTP) et des demandes telnet.

4. Procédé selon une ou plusieurs des revendications précédentes, comprenant en outre les étapes de :
- détermination, par ledit système informatique (1), d'un état de connexion entre ledit client et ledit système informatique ;
- relation dudit premier état d'application et d'un second état d'application audit état de connexion.

5. Procédé selon une ou plusieurs des revendications précédentes, dans lequel ledit système informatique (1) maintient une quantité de seuil de demandes de couche d'application client par unité de temps, le procédé comprenant l'étape d'instruction dudit programme d'application informatique pour exécuter lesdites demandes de couche d'application client seulement si la quantité de demandes de couche d'application client est en dessous de ladite quantité de seuil.

6. Procédé selon une ou plusieurs des revendications précédentes, comprenant en outre les étapes de :
- distinction entre des clients malicieux et non malicieux ;
- classement des demandes de couche d'application client à partir desdits clients malicieux et non malicieux pour obtenir une file de demandes de couche d'application de client non malicieux suivies par lesdites demandes de couche d'application de client malicieux ;
- instruction dudit programme d'application informatique pour d'abord exécuter lesdites demandes de client non malicieux.

7. Procédé selon la revendication 6, comprenant en outre les étapes d'analyse desdites demandes de couche d'application de client malicieux à partir de ladite file après avoir donné des instructions audit programme d'application informatique d'exécuter toutes les demandes de couche d'application de client non malicieux.

8. Procédé selon la revendication 6 ou 7, dans lequel ledit système informatique (1) stocke un historique de contact à partir des clients, comprenant en outre l'étape de classement de clients connus à partir dudit historique de contact plus élevé dans ladite file que des clients non connus à partir dudit historique de contact.

9. Procédé selon une ou plusieurs des revendications 6 à 8, comprenant en outre l'étape de distinction desdits clients malicieux et non malicieux sur la base d'au moins un de ce qui suit : nombre de demandes de couche d'application client reçues à partir de clients, historique de contact de clients avec ledit système informatique, type de contenu de demandes de couche d'application, contenu de demandes de couche d'application reçues à partir desdits clients.

10. Procédé selon une ou plusieurs des revendications précédentes, dans lequel ledit client est implémenté dans un dispositif client (2A-2E) et ledit système informatique (1) est raccordé à au moins un réseau de communication (3), pour communiquer électroniquement avec ledit dispositif client, le procédé comprenant l'étape de réception de ladite demande de couche d'application client sur ledit réseau de communication.

11. Procédé selon une ou plusieurs des revendications précédentes, dans lequel ledit système informatique (1) ou ledit autre système informatique comprend une base de données (8) et ledit programme d'application informatique est un programme d'application de base de données.

12. Procédé selon la revendication 11, comprenant en outre les étapes de :
- réception dudit premier ensemble de demandes de base de données admissibles à partir dudit programme d'application de base de données ;
- instruction d'une exploitation de base de données dudit programme d'application de base de données de ladite base de données (8) seulement si ladite demande de couche d'application client correspond à une desdites demandes de base de données admissibles.

13. Programme informatique comprenant des parties de code logiciel adaptées pour, lorsqu'il est installé ou exécuté par un système électronique, réalisant le procédé selon les revendications 1 à 12.

14. Support contenant le programme informatique de la revendication 13.

15. Système informatique (1) pour commander un programme d'application informatique sur ledit système informatique ou un autre système informatique, ledit système informatique étant configuré pour connecter à au moins un client comprenant :
- un récepteur de demande de client (21) configuré pour recevoir une demande de couche d'application de client et une autre demande de couche d'application client destinées audit programme d'application informatique, ledit programme d'application informatique comprenant au moins un premier état d'application et un second état d'application, dans lequel les premier et second états d'application sont différents états d'application pouvant être obtenus en exécutant la demande de couche d'application client ;
**caractérisé par** un module analyseur (22) configuré pour analyser si ladite demande de couche d'application client correspond à une demande de couche d'application admissible d'un premier ensemble de demandes comprenant une ou plusieurs demandes de couche d'application admissibles correspondant audit premier état d'application dudit programme d'application informatique en relation audit client et si ladite autre demande de couche d'application client correspond à une demande de couche d'application admissible dudit second ensemble de demandes d'une ou plusieurs demandes de couche d'application admissibles correspondant audit second état d'application dudit programme informatique en relation audit client ;
- un module d'instruction (23) configuré pour donner une instruction audit programme d'application informatique d'exécuter ladite demande de couche d'application client seulement si ladite demande de couche d'application client correspond à une desdites demandes de couche d'application admissibles dudit premier ensemble de demandes pour obtenir ledit second état d'application et pour donner une instruction audit programme d'application informatique d'exécuter ladite autre demande de couche d'application client seulement lorsque ladite autre demande de couche d'application client correspond à une desdites demandes de couche d'application admissibles dudit second ensemble de demandes.

16. Système informatique (1) selon la revendication 15, dans lequel ledit système informatique est configuré en outre pour réaliser le procédé selon une quelconque des revendications 2 à 12.
